Europäisches Patentamt

European Patent Office

Office européen des brevets

(11) Publication number: 0 336 643 A1

# EUROPEAN PATENT APPLICATION

(21) Application number: 89303143.5

(51) Int. Cl.⁴: **G11B 23/087**

(22) Date of filing: 30.03.89

(30) Priority: 05.04.88 GB 8807936

(43) Date of publication of application:
11.10.89 Bulletin 89/41

(34) Designated Contracting States:
AT BE CH DE ES FR GR IT LI LU NL SE

(71) Applicant: **SHAPECOURT LIMITED**
**101 Sandford Road**
**Birmingham B12 9BU(GB)**

(72) Inventor: **Davis, Raymond Leslie**
**6 Poplar Avenue**
**West Bromwich West Midlands B70 6UP(GB)**

(74) Representative: **Spruce, George Philip et al**
**George Fuery & Co. Whitehall Chambers 23**
**Colmore Row**
**Birmingham B3 BL2(GB)**

(54) Video and other tape or film cassettes.

(57) Cassette assembly, particularly a VHS compatible video tape assembly is formed as two separable sub-cassettes, a cartridge (10) and a wind-off unit (12). The cartridge houses a reel (16) holding blank or prerecorded tape or other medium (18) while the wind-off unit accommodates a take-up reel (32) and includes a tongue or other locating formation (36) with which the cartridge engages. The leader (22) of the tape or other medium is guided to the exterior of the cartridge so that it can be connected to or picked up by a hook (42) or the like of the take-up reel.

Fig.1

EP 0 336 643 A1

## VIDEO AND OTHER TAPE OR FILM CASSETTES

This invention relates to cassettes for recording media such as tape or film, particularly but not exclusively magnetic video tape.

One particular application of the invention is to video cassettes embodying or compatible with the widely used VHS system which is now the almost universal standard for video cassette recorders in general use in the home and elsewhere and hence for video tape recordings on general sale and/or available for loan or hire from video libraries.

The VHS system and the construction of the standard cassettes used therewith is well known in the art and will not be described in any detail. Further information thereon may be obtained, for example, from British patents 1558056 and 1561443 of Nippon Victor KK and other publications.

The standard VHS cassette is a unitary assembly which is bulky to transport and store being some 190x100x25mm in overall size excluding any outer storage case. It is costly to manufacture as a complete cassette mechanism including a pair of tape reels, tape guide rollers, reel control pawls etc has to be provided even for a short run of tape.

The object of the invention is to provide a VHS compatible or other cassette assembly which is convenient, effective and reliable in use and which gives rise to substantial savings in manufacturing, storage and transport costs.

According to one aspect of the invention there is provided a two-part cassette assembly comprising a cartridge sub-cassette containing a single reel having a stock of film, tape or other recording medium operatively wound thereon with a leader guided to the exterior of the sub-cassette enabling the medium to be drawn therefrom in use, and a wind-off sub-cassette containing a single take-up reel having leader engagement means for winding engagement with said medium leader; interengaging formations of the two sub-cassettes releasably locating them together, the assembly so formed being compatible with a unitary cassette incorporating a pair of reels operable by standard equipment for use with said medium.

According to a further aspect of the invention there is provided a two-part VHS video cassette assembly comprising a cartridge sub-cassette containing a single tape reel having a stock of blank or pre-recorded tape operatively wound thereon with a tape leader guided to the exterior of the sub-cassette enabling the tape to be drawn therefrom in use, and a wind-off sub-cassette containing a single take-up reel having leader engagement means for winding engagement with said tape leader; interengaging formations of the two sub-cassettes releasably locating them together, the assembly so formed being operable by standard VHS equipment for recording and/or playback compatibly with and in substitution for standard VHS tape cassettes.

Preferably the reel of the cartridge sub-cassette is substantially wholly enclosed by a housing of the latter and includes reel control mechanism, e.g. a reel brake or ratchet and pawl mechanism preventing unwinding of the tape or other medium except when the cartridge sub-cassette is engaged in its operating relationship with the wind-off sub-cassette.

The take-up reel may also have reel control mechanism which will be incorporated in the wind-off sub-cassette to operate in known manner, as in the VHS system.

Various forms of leader engagement means may be used, preferably operating automatically to engage and pickup the leader end after it has been manually threaded into a guide formation of the wind-off sub-cassette on rotation of the take-up reel in the take-up direction, for example a trailing hook sprung radially outwards of the take-up reel core to catch a slot or other aperture in the leader end.

A hook or stop may also be provided at a static location on or in the cartridge sub-cassette to engage said leader when it is being wound back into the latter sub-cassette so that the leader end is not lost therewithin.

The assembly, conveniently the wind-off sub-cassette, may include selectively operable disabling means for inhibiting tape end detection means of record or playback equipment which would otherwise halt rewinding as soon as the leader was reached, thus enabling the tape or other medium to be rewound fully off and be detached from the take-up reel.

In the case of a cassette assembly for the VHS video tape system said disabling means may comprise a manually operable blind or shutter, e.g. a rotatable part cylindrical shutter mounted coaxially in the lamp receiving hole of a housing of the wind-off sub-cassette, to prevent photo-detection of a transparent leader which would otherwise halt rewinding.

One example of the invention is now more particularly described with reference to the accompanying drawings wherein:-

Figure 1 is a diagrammatic horizontal sectional view of a two-part VHS video cassette assembly in an assembled operative condition;

Figure 2 is a top view of the assembly with sub-cassettes thereof separated, and

Figure 3 is an end view in the direction of arrows 3 of Figure 2.

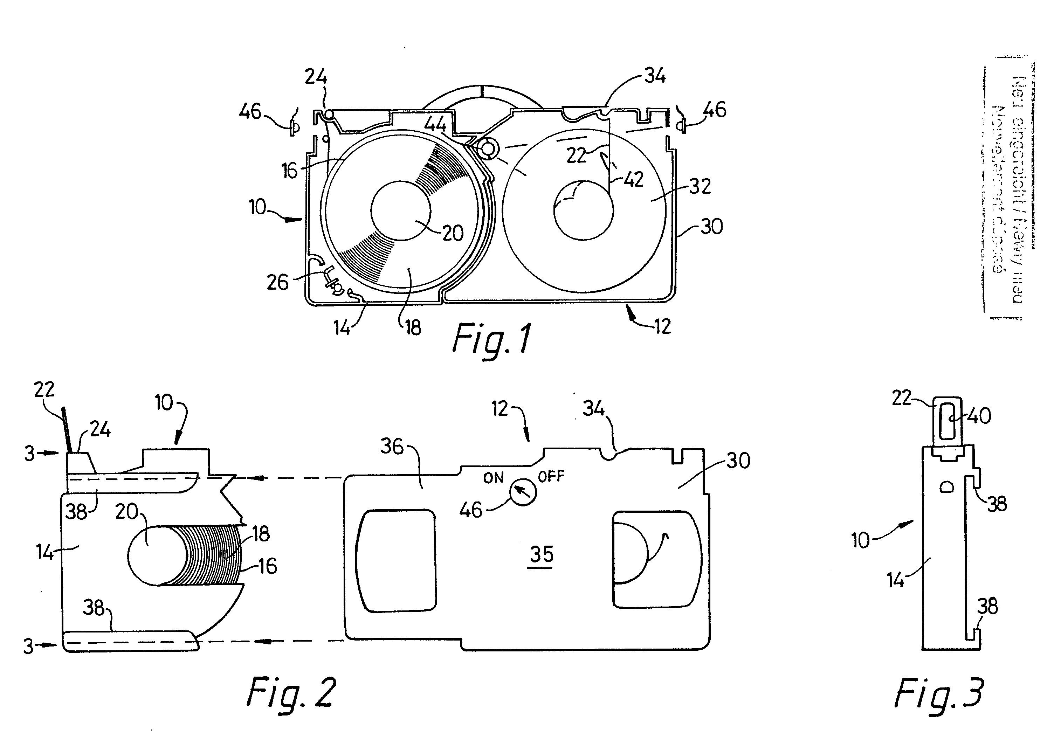

In the assembled condition shown in Figure 1 this example of the invention is fully compatible with standard VHS video cassette record and playback equipment and is interchangeable with the standard one-piece double reel cassettes used therewith and operating in known manner.

However, the assembly is separable into two main parts or sub-cassettes, a cartridge 10 and a wind-off unit 12.

Cartridge 10 comprises a housing 14 within which is a tape reel 16 having a stock of blank or pre-recorded video tape 18 wound thereon. The trailing or innermost end of tape 18 is permanently anchored to a core 20 of reel 16 by a transparent trailing leader in the usual manner. The outer or leading end of tape 18 is provided with another transparent leader 22 which extends through a guide aperture 24 provided with a guide roller in known manner at one corner of the housing 14.

A rim of reel 16 is toothed or notched (not shown) for engagement by a control pawl 26 which prevents unwinding of reel 16 except when cartridge 10 is located in its operative position so as to reduce risk of exposure of the tape itself to handling or damage.

Cartridge 10 is approximately half the size of the complete cassette assembly, its housing only needs to be large enough to accommodate reel 16 for its fullest protection and it need contain no other moving parts or mechanism apart from the tape guide rollers to aperture 24 and the control pawl 26. Thus it is convenient and space saving to transport and store and is economical to produce.

The wind-off unit 12 comprises a housing 30 accommodating a take-up reel 32 with associated tape guide aperture 34 and guide rollers. The top wall 34 of housing 30 extends longitudinally beyond the remainder of the housing to provide a locating tongue 36 having parallel side edges for mating sliding engagement between a pair of parallel flanged ribs 38 on the front face of the cartridge housing 14 so that they can be slid together into positive location for operative use as shown in Figure 1.

It will be appreciated that a user need have only one wind-off unit 12 e.g. for use with a domestic video recorder, any number of cartridges 10 e.g. from a video library being interchangeable therewith for use.

The engagement together of cartridge 10 and unit 12 automatically displaces control pawl 26 out of engagement with the tape reel 16 thus freeing it for rotation enabling the leader 22 to be pulled out of housing 14 sufficiently for its insertion through the guide aperture 34 of housing 30 to position it between the flanges of the take-up reel 32. Reel 32 is provided with automatic leader engagement means, in this example the end of leader 22 is formed with a slot 40 and the core of reel 32 has a trailing spring metal hook 42 biased radially outwards to engage the slotted leader on winding rotation of said reel. Thus tape 18 can be wound or re-wound on or off tape reel 16 in normal manner e.g. for play or record, fast forward or fast rewind.

The VHS system includes a photosensor device for detecting when the transparent leaders of the tape are reached to halt powered reel rotation in the relevant direction before any excess stress is applied to the tape which would otherwise tend to pull it off the reel core or otherwise strain or damage it.

To enable the leader 22 to be wound fully off the take-up reel 32 so as to permit separation of cartridge 10 from unit 12 manually operable disabling means are provided to selectively inhibit action of the photosensor.

The standard socket or hole on the mid-line of the assembly which coacts with a light source of the video equipment is provided in a portion of the housing 30 of unit 12. A part cylindrical rotatable shutter 44 (Figure 1) locates in said socket and can be angularly shifted through about 90 deg. between an "on" position at which the light can pass in two directions to the sensors 46 of the equipment through either of the transparent tape leaders in known manner to halt winding or rewinding, and an "off" position in which the shutter prevents light passing to the sensor 46 which is adjacent the guide aperture 24 of the cartridge 10 in its operative position, thus inhibiting the detection of the transparent leader 22 when it is being wound back onto tape reel 16 so allowing it to be wound free of take-up reel 32.

To avoid leader 22 being pulled right into housing 14 where it could not easily be retrieved a further stop or hook may be provided at the mouth of aperture 24 to engage slot 40 and retain it there.

Shutter 44 is operated by a small recessed knob or plate 46 with appropriate indication on the top face of the housing 30.

A further control pawl (not shown) cooperating with a notched or toothed rim of the take-up reel 32 may be provided acting in known manner to prevent unwinding or damage to the tape if the complete assembly should be removed from the equipment without the tape being fully wound back onto reel 16.

The standard VHS cassettes are provided with a swinging door covering the flight of tape between the guide apertures of the respective reels which is only swung out of position automatically when the cassette is inserted in its operative position in the equipment. It is contemplated that this or any equivalent protection might be dispensed with where the two-part cassette assembly of the invention is used as the tape will always normally be fully wound back into the cartridge 10 when not in use having in mind that this process must be carried out to permit separation of the cartridge from the wind-off unit 12, thus no part of the tape other than the end of leader 22 will normally be exposed.

Alternately each of the sub-cassettes, cartridge 10 and unit 12, may be provided with a respective hinged swinging door section covering its otherwise exposed front face, the two door sections abutting end-to-end when the two parts are mated together, and an abutment on one section engaging the other section so that they are swung open in unison when the assembly is inserted into the equipment. It is contemplated that if such door sections are used each one may be internally coupled to the respective control pawl of the associated tape and take up reels, freeing them for rotation only when the assembly is so inserted. This adds to the protection of the tape against damage or meddling.

## Claims

1. A two-part cassette assembly characterised in that it comprises a cartridge sub-cassette (10) containing a single reel (16) having a stock of film, tape or other recording medium (18) operatively wound thereon with a leader (22) guided to the exterior of the sub-cassette enabling the medium to be drawn therefrom in use, and a wind-off sub-cassette (12) containing a single take-up reel (32) having leader engagement means (42) for winding engagement with said medium leader; interengaging formations (36, 38) of the two sub-cassettes releasably locating them together, the assembly so formed being compatible with a unitary cassette incorporating a pair of reels operably by standard equipment for use with said medium.

2. A cassette assembly as in Claim 1 characterised in that said stock of medium is a blank or pre-recorded magnetic video tape (18) and the complete assembly is compatible with a unitary cassette of standard video format.

3. A VHS video cassette assembly characterised in that it comprises a cartridge sub-cassette (10) containing a single tape reel (16) having a stock of blank or prerecorded tape (18) operatively wound thereon with a tape leader (23) guided to the exterior of the sub-cassette enabling the tape to be drawn therefrom in use, and a wind-off sub-cassette (12) containing a single take-up reel (32) having leader engagement means (42) for winding engagement with said tape leader; interengaging formations (36, 38) of the two sub-cassettes releasably locating them together, the two-part assembly so formed being operable by standard VHS equipment for recording and/or playback compatibly with and in substitution for standard VHS tape cassettes.

4. A cassette assembly as in Claim 1, 2 or 3 characterised in that the cartridge sub-cassette includes a housing (14) substantially wholly enclosing the reel of that sub-cassette.

5. A cassette assembly as in Claim 4 characterised in that the cartridge sub-cassette includes reel control mechanism (26) operating to prevent unwinding of the tape or other medium except when the cartridge sub-cassette is engaged in operating relationship with the wind-off sub-cassette.

6. A cassette assembly as in Claim 5 characterised in that said reel control mechanism includes a toothed or notched ratchet formation of the cartridge sub-cassette reel (16) and a coating control pawl (26) preventing said unwinding, said pawl being displaced out of engagement with said ratchet when the two sub-cassettes are located together.

7. A cassette assembly as in any preceding claim characterised in that the wind-off sub-cassette includes reel control mechanism coacting with the take-up reel to prevent unwinding of tape therefrom when the assembly is not operatively positioned in said equipment.

8. A cassette assembly as in any preceding claim characterised by automatically operating leader engagement means (42) which will pick up the leader end on rotation of the take-up reel in the take-up direction from a guide formation (34) positioning said leader end.

9. A cassette assembly as in Claim 8 characterised in that said engagement means includes a trailing hook (42) sprung radially outwards of a core of the take-up reel (32) to catch a slot or other aperture (40) in said leader end.

10. A cassette assembly as in Claim 9 characterised in that the cartridge sub-cassette includes a hook or stop to engage said leader and when the tape or other medium is wound back into the latter sub-cassette so that the leader end is not lost therewith.

11. A cassette assembly as in any preceding claim characterised by selectively operable disabling means 44 for inhibiting tape or medium end detection means of record or playback equipment which would otherwise halt re-winding as soon as the leader was reached.

12. A cassette assembly as in Claim 11 so far as dependent on Claim 2 characterised in that the disabling means comprises a manually operable blind or shutter (44) to prevent photo-detection of a transparent leader (22) which would otherwise halt re-winding.

13. A cassette assembly as in Claim 12 wherein said blind or shutter is a rotatable part-cylindrical shutter (44) mounted coaxially in a lamp receiving hole of a housing of the wind-off sub-cassette for selective disabling of the VHS video system tape end photo-detection means (46).

EP 0 336 643 A1

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 201 156 (KANCHIKU, HIKOFUMI) * page 2, line 15 - line 34; page 5, line 4 - line 24; figure 1 * | 1,4 | G 11 B 23/087 |
| A | | 3 | |
| X | PATENT ABSTRACTS OF JAPAN vol. 12, no. 34 (P-662) (2881), 2 February 1988; & JP - A - 62184677 (SONY CORPORATION) 13 August 1987 * see the whole document * | 1-4 | |
| A | DE-A-2 032 089 (EASTMAN KODAK CO.) * page 5, line 21 - page 6, line 21; figures 1,8,9 * | 1-4 | |
| A | US-A-3 677 494 (ARTHUR I. PROTAS) * column 1, line 71 - column 2, line 3; figure 7 * | 1,3,4 | |

TECHNICAL FIELDS
SEARCHED (Int. Cl.4)

G 11 B

The present search report has been drawn up for all claims

| Place of search | Date of completion of the search | Examiner |
|---|---|---|
| BERLIN | 26-06-1989 | GERARD E.A.S. |